# EUROPEAN PATENT SPECIFICATION

(11) **EP 2 589 179 B1**
(45) Date of publication and mention of the grant of the patent: **09.08.2017**
(21) Application number: 11801181.6
(22) Date of filing: 01.07.2011
(51) Int. Cl.: H04L 9/32, H04L 9/08, H04L 29/06

(54) **APPARATUS AND METHOD FOR CONTROLLING ACCESS TO MULTIPLE SERVICES**
VORRICHTUNG UND VERFAHREN ZUR STEUERUNG DES ZUGRIFFS AUF MEHRERE DIENSTE
APPAREIL ET PROCÉDÉ PERMETTANT DE CONTRÔLER UN ACCÈS À UNE PLURALITÉ DE SERVICES

(30) Priority: 01.07.2010 KR 20100063543
(43) Date of publication of application: 08.05.2013
(73) Proprietor: Samsung Electronics Co., Ltd., Gyeonggi-do 443-742 (KR)
(72) Inventor: CHOI, Seok-Hoon, Gyeonggi-do 443-742 (KR); LEE, Yang-Un, Gyeonggi-do 443-742 (KR); PARK, Sung-Jin, Gyeonggi-do 443-742 (KR); LEE, Seung-Yong, Gyeonggi-do 443-742 (KR)
(74) Representative: Nederlandsch Octrooibureau
(86) International application number: PCT/KR2011/004865
(87) International publication number: WO 2012/002776

(56) References cited:
- WO-A1-2009/093941
- WO-A2-2009/078609
- KR-A- 20040 004 724
- KR-A- 20050 019 647
- US-A1- 2008 072 301
- US-A1- 2009 063 862

## Description

### Technical Field

The present invention relates generally to an access control apparatus and method, and more particularly, to an apparatus and method for performing authentication on a plurality of services and acquiring an access right to the services.

### Background Art

The mobile telecommunications market is continuously required to produce new services through recombination and/or integration of the existing technologies. Nowadays, due to the development of telecommunications and broadcasting technologies, the conventional broadcasting systems and/or mobile communication systems may provide broadcast services on portable terminals (hereinafter referred to as 'terminals' for short) such as cell phones and Personal Digital Assistants (PDAs).

Due to the combinations of these potential and actual market demands, the growing user needs for multimedia services, the business strategy to provide new services such as broadcast services in addition to the existing voice services, and the interests of Information Technology (IT) companies that enhance their mobile communications businesses, accommodating the needs of the consumers, the convergence of mobile communication services and Internet Protocol (IP) is a new trend in the development of the next-generation mobile communication technologies.

With the growing interests in a variety of applications for mobile games, internet services, etc., many studies have been conducted on technology like Open Application Program Interface (Open API), which provides specific functions (or features) such as a phonebook function, a camera function, and a text service, to an application client such as a web browser and a widget through the web runtime environment.

WO 2009/093941 A1 describes a method and apparatus for checking an aggregated web service requested by a terminal user. A web service authentication node receives and stores a published description of the aggregated web service, as offered from a primary web service provider and involving one or more sub-services offered from one or more secondary web service providers. When the authentication node receives a request made by the user for the aggregated web service, it is checked whether the sub-services and secondary service providers of the aggregated web service are acceptable for the user according to a policy of the user. If all sub-services and secondary service providers are deemed acceptable or safe, the aggregated web service can be authenticated. Otherwise, the request is rejected or the user is warned that the aggregated web service is deemed unsafe. Thereby, access to sensitive user data by secondary service providers can be controlled and made visible.

### Disclosure of Invention

### Technical Problem

Through Open API, new services may be provided by relatively easily applying specific conventional computer programs and software functions. In accordance with the conventional techniques, an application is required to perform an authentication procedure on each service module individually, when it desires to provide new services (e.g., a mash-up service) using functions for a plurality of service providing modules.

Conventionally, however, there is no integrated authentication method for covering the functions of a plurality of service providing modules.

### Solution to Problem

An aspect of the present invention is to address at least the above-mentioned problems and/or disadvantages and to provide at least the advantages described below. Accordingly, an aspect of exemplary embodiments of the present invention is to provide an apparatus and method for controlling an access to a plurality of services.

In accordance with one aspect of the present invention, there is provided an apparatus for controlling an access to a plurality of services. The apparatus includes a service authentication requesting unit for requesting authentication for the plurality of services; a service provider for providing the plurality of services, and providing an access right to the provided services; and an access right controller for identifying a plurality of authentication-requested services upon receiving an authentication request for the plurality of services from the service authentication requesting unit, and acquiring the access right from the service provider providing the plurality of identified services.

In accordance with another aspect of the present invention, there is provided a method for controlling an access in an apparatus for controlling an access to a plurality of services. The method includes receiving an authentication request for the plurality of services; identifying the plurality of authentication-requested services; and acquiring an access right from a service provider providing the plurality of identified services.

### Advantageous Effects of Invention

The present invention may acquire access rights to a plurality of services or functions at a time by performing authentication on the application client and granting access rights to the plurality of services or functions.

Therefore, the web runtime environment may perform authentication on the application client and acquire and provide access rights to a plurality of service providing modules at a time without the application client requesting to acquire an access right to each service providing module individually, thereby allowing the service providing modules to provide services without realization of a plurality of mechanisms for authenticating the application client.

### Brief Description of Drawings

FIG. 1 is a diagram illustrating a configuration of a system providing an integrated service of multiple services or functions according to an embodiment of the present invention;
FIG. 2 is a flow diagram illustrating a process of performing integrated service authentication on an application client based on service authentication method information and acquiring an access right to an integrated service by an access controller according to an embodiment of the present invention;
FIG. 3 is a flow diagram illustrating a process of performing integrated service authentication on an application client based on service support information and acquiring an access right to an integrated service by an access controller according to an embodiment of the present invention;
FIG. 4 is a flow diagram illustrating a process of performing integrated service authentication on an application client and acquiring an access right to an integrated service by a service providing client or server according to an embodiment of the present invention;
FIG. 5 is a flow diagram illustrating a process of performing integrated service authentication on an application client and acquiring an access right to an integrated service by a service providing client or server based on an authentication response from a service providing client according to an embodiment of the present invention;
FIG. 6 is a flow diagram illustrating a process of performing integrated service authentication on an application client and acquiring an access right to an integrated service by a service providing server according to an embodiment of the present invention;
FIG. 7 is a flow diagram illustrating a process of performing integrated service authentication on an application client and acquiring an access right to an integrated service by an authentication server according to an embodiment of the present invention; and
FIG. 8 is a flowchart illustrating a process of performing integrated service authentication in response to a service authentication request and acquiring an access right to an integrated service by a terminal according to an embodiment of the present invention.

### Best Mode for Carrying out the Invention

Exemplary embodiments of the present invention will now be described in detail with reference to the accompanying drawings. In the following description, specific details such as detailed configuration and components are merely provided to assist the overall understanding of exemplary embodiments of the present invention.

Throughout the drawings, the same drawing reference numerals will be understood to refer to the same elements, features and structures.

The present invention relates generally to an Open Application Program Interface (Open API), or an open programming interface, which opens an interface standardized to allow specific computer programs and software functions to be utilized even in other programs.

Open API provides specific functions such as a phonebook function, a camera function, and a text service, to an application client like a web browser or a widget through the web runtime environment.

A web application is executed in the form of the data interpreted in a web browser and of a java script code, and may access a specific service or function by calling a defined API. The web application may manage or monitor which of defined APIs is supported in a host device, and may be compatible with services or functions in a terminal through the supportable API.

The services or functions in a terminal may be provided through the web runtime environment, or may be provided through APIs, which are provided by other device software like an OMA enabler client.

In the following description of the present invention, it will be assumed that authentication on services or functions provided by an OMA enabler client or server is performed using Open API.

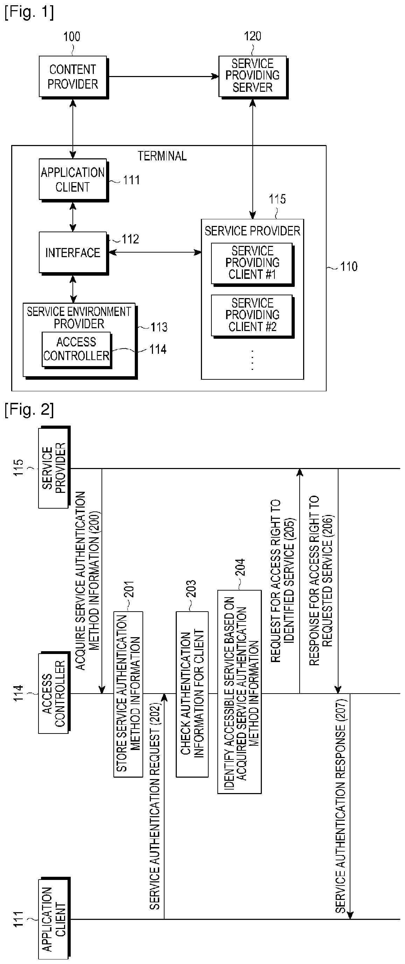

FIG. 1 illustrates a configuration of a system providing a plurality of services or functions according to an embodiment of the present invention.

The system includes a content provider 100, a terminal 110, and a service providing server 120. The terminal 110 includes an application client 111, an interface 112, a service environment provider 113 with an access controller 114, and a service provider 115 with a plurality of service providing clients.

The application client 111, like a web browser or a widget, outputs personalized programs in place of a web application or a web browser, which is application software that interworks with and outputs Hyper Text Markup Language (HTML) documents or files undergoing interactive communication in a web server. A service authentication requesting unit for requesting authentication on a plurality of services may be provided as a part of the application client 111.

The interface 112, an application program interface, is an interface standardized to allow a user to utilize a specific computer program or software function even in other programs.

The service environment provider 113 provides the minimum requirements needed to execute services or functions requested through the application client 111, and the minimum requirements may include core classes and various supportable files.

The service environment provider 113 includes the access controller 114 representing an access right controller that acquires an access right from the service provider 115 that identifies a plurality of services or functions and provides a plurality of identified services. The access controller 114 performs authentication on services or functions upon request of the application client 111, or forwards an authentication request of the application client 111 to a service providing client or server, and an authentication server.

In response to a service authentication request from the application client 111, the access controller 114 performs authentication on the application client 111, determines its accessible services or functions, acquires an access right to the determined services or functions, and provides the acquired access right to the application client 111.

The service provider 115, an OMA enabler client, delivers services or functions provided from the service providing server 120 to the interface 112, or provides the services or functions it manages in the terminal 110, to the application client 111. These services or functions may include mobile advertising services, location information services, terminal control services, unified messaging services, etc.

The service provider 115 includes a plurality of service providing clients providing services or functions, and supports a function of providing specific services or functions provided through the interface 112 and the service environment provider 113 in the terminal 110, to the application client 111.

The service providing server 120, an OMA enabler server, delivers services or functions requested by the application client 111 to the service provider 115.

In this way, the present invention may acquire a plurality of access rights at a time without requesting to acquire access rights to a plurality of services or functions from service providing clients individually, so the user may conveniently receive an integrated service including a plurality of services or functions.

In the present invention, when the application client 111 implements a new application or software program using services or functions for a plurality of service providing clients or servers, any one of the access controller 114, the service provider 115, the service providing server 120, and the authentication server may perform authentication on the application client 111, and request an access right to the services or functions.

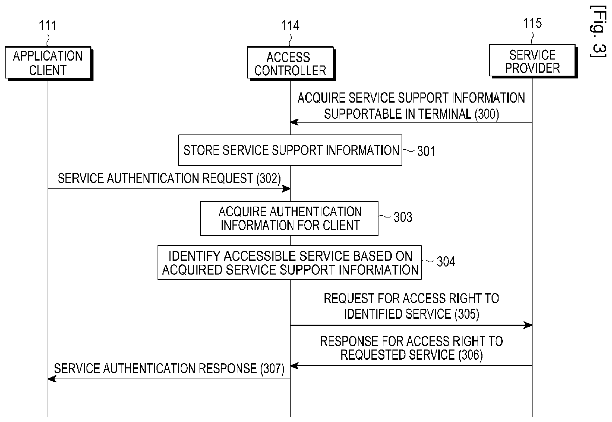

A process of acquiring an access right to services or functions by performing authentication on the application client 111 using authentication information including service authentication method information and service support information by the access controller 114 will be described in detail below with reference to FIGs. 2 and 3.

FIG. 2 illustrates a process of performing service authentication on an application client based on service authentication method information and acquiring an access right to a plurality of services by an access controller according to an embodiment of the present invention.

Although an OMA enabler will be assumed to be a service providing client(s) in the present invention, it will be understood by those of ordinary skill in the art that its type is not limited to the service providing client.

In step 200, the access controller 114 acquires service authentication method information from the service provider 115. The service authentication method information is information about a method of authenticating services or functions presently supportable in the terminal 110.

Although the access controller 114 is assumed to acquire the service authentication method information from the service provider 115 in an embodiment of the present invention, the access controller 114 may acquire the service authentication method information from an entity managing the service authentication method information, like the service providing server 120 or the authentication server.

The service authentication method information may be defined as shown in Table 1 below, but its format is not limited thereto.
Table 1

**[Table 1]**

| Parameter name | XML type | Description |
|---|---|---|
| OMA Enabler Name | A | Name of OMA Enabler |
| Authentication Method Type | A | Authentication method of supported OMA Enabler |
| | | 1. Authentication in OMA Client |
| | | 2. Authentication in OMA Server |
| | | 3. Authentication in Authentication Server |

For example, in the service authentication method information, a name of an OMA enabler may be set as 'text messaging service' and an authentication method of a supported OMA enabler may be set as 'authentication in an OMA client'.

In step 201, the access controller 114 stores the acquired service authentication method information.

In step 202, the application client 111 sends to the access controller 114 an authentication request for a plurality of services, which includes authentication information such as an application client identifier and an authentication key, and service information for requesting an access right.

In step 203, the access controller 114 checks the received authentication information for the application client 111 upon the request. Specifically, the access controller 114 performs authentication by determining whether to authenticate the application client 111 based on the identifier and the authentication key received from the application client 111.

After completing the authentication on the application client 111, the access controller 114 determines accessible services based on the acquired service authentication method information in step 204.

In other words, the access controller 114 identifies an authentication method for the access right-requested services by checking the service access right request information received from the application client 111.

For example, assuming that the service, an access right to which is requested by the application client 111, is a 'phonebook function' and the 'phonebook function' can be authenticated in a 'first service providing client', the access controller 114 requests an access right to the identified service from the first service providing client in the service provider 115, in step 205.

In step 206, the service provider 115 sends a response for an access right to the requested service, to the access controller 114.

In step 207, the access controller 114 sends a response to the authentication request for an integrated service to the application client 111 to allow the application client 111 to acquire an access right to the requested service. If responses for access rights to a plurality of services are received from the service provider 115, the access controller 114 may collect the received responses and send them to the application client 111, or may send the received responses to the application client 111 individually, if necessary.

FIG. 3 illustrates a process of performing service authentication on an application client based on service support information and acquiring an access right to a plurality of services by an access controller according to an embodiment of the present invention.

In step 300, the access controller 114 acquires service support information for a list of services supportable in the terminal 110, from the service provider 115.

Although the access controller 114 is assumed to acquire the service support information from the service provider 115 in an embodiment of the present invention, the access controller 114 may acquire the service support information from an entity managing the service support information, like the service providing server 120 or the authentication server.

In step 301, the access controller 114 stores the acquired service support information.

In step 302, the application client 111 sends a service authentication request to the access controller 114 in order to use a service whose user is identified and authenticated in a terminal or server providing Open API services or functions.

Specifically, the application client 111 generates a service authentication request message including service authentication information, such as an application client identifier, an authentication key, a version of supported services or functions, a list and a supported version of supported services or functions, and names and versions of its services or functions, and then sends the generated service authentication request message to the access controller 114. The generated service authentication request message may be defined as shown in Table 2 below.
Table 2

**[Table 2]**

| Parameter name | XML type | Description |
|---|---|---|
| App_Client_ID | A | Identifier of application client |
| Certificate Key | A | Certificate with which a terminal or server providing Open API service or function can identify a user |
| Package Version | A | Version of supported OMA EnablerSupported OMA Enabler service or function is defined for each version(for example, for OMA_Version_1.0: MobAd 1.0, CPM 1.0 is supported, and for OMA_Version_1.1: MobAd 1.0, CPM 1.0 is supported and DM 1.0 is supported) |
| OMA Enabler List | E | List and supported version of supported OMA EnablersIncludes attributes: OMA Enabler Name, OMA version |
| OMA Enabler Name | A | Name of supported OMA Enabler |
| OMA version | A | Version of supported OMA Enabler |

The service authentication request message generated by the application client 111 and defined in Table 2 includes an application client ID App_Client_Id which is unique in the service provider and used as an identifier of the application client 111, an authentication key 'Certificate Key' which is a certificate with which a terminal or server providing Open API services or functions can identify a user, a package version 'Package Version' defining a list of OMA Enabler services or functions provided in a terminal or server, and an OMA Enabler List item. The OMA Enabler List includes a supported OMA Enabler Name and a supported OMA Enabler Version item.

Since the package version includes a version for OMA Enabler services or functions, the access controller 114 may request the OMA enabler included in package information to request an authentication procedure based on the package information.

Accordingly, an authentication request message generated in the present invention may include a package version including one or more OMA enablers, or may include list and version information of OMA enablers to be used. The OMA enabler list and version information may be included in the authentication request message together with the packet version.

In step 303, the access controller 114 checks the received authentication information for the application client 111 upon the request. Specifically, the access controller 114 performs authentication by determining whether to authenticate the application client 111 based on the identifier and the authentication key received from the application client 111.

After completing the authentication on the application client 111, the access controller 114 determines accessible services based on the acquired service support information in step 304.

In other words, the access controller 114 identifies services supportable in the service provider 115 by comparing the service authentication information received from the application client 111 with the service support information.

For example, assuming that the service, an access right to which is requested by the application client 111, can be authenticated in a 'second service providing client' when it is a 'phonebook function' with a '1.0 version', then the access controller 114 requests an access right to the identified service from the second service providing client in the service provider 115, in step 305.

In step 306, the service provider 115 sends a response for an access right to the requested service to the access controller 114.

In step 307, the access controller 114 sends a response to the authentication request for an integrated service to the application client 111 to allow the application client 111 to acquire an access right to the requested service. If responses for access rights are received from a plurality of service providing clients, the access controller 114 collects the received responses and sends them to the application client 111.

In this way, the present invention may acquire access rights to a plurality of services or functions at a time by performing authentication on the application client 111 within the terminal 110 and granting access rights to a plurality of services or functions.

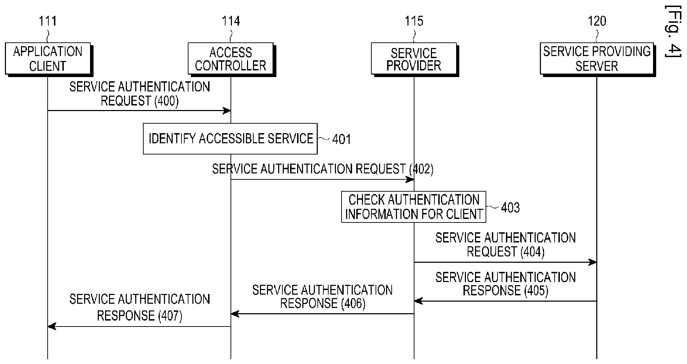

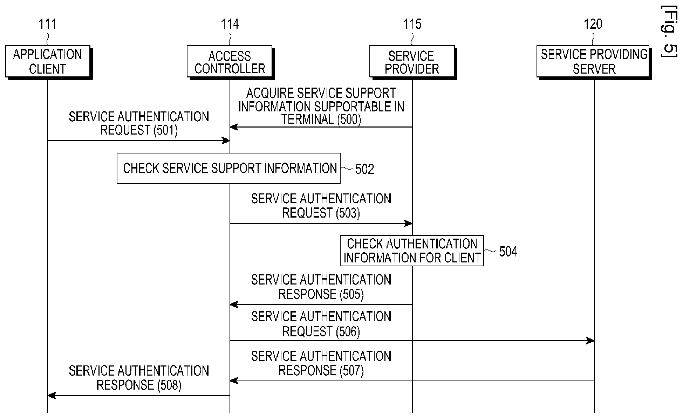

A process of performing authentication on the application client 111 and acquiring an access right to services or functions by the service provider 115 or the service providing server 120 will be described in detail below with reference to FIGs. 4 and 5.

An example of the case where the service provider 115 manages access control by determining the possibility of authentication, may include a case where the service provider 115 performs authentication on access control to in-terminal functions, services and resources, such as in-terminal address book, camera information, and battery information. An example of the case where the service providing server 120 manages access control by determining the possibility of authentication, may include a case where the service providing server 120 performs authentication on access control to in-server functions, services and resources, such as Mobile Advertising (OMA MobAd), Dynamic Content Delivery (OMA DCD), and a server address book.

FIG. 4 illustrates a process of performing integrated service authentication on an application client and acquiring an access right to an integrated service by a service providing client or server according to an embodiment of the present invention.

In step 400, the application client 111 sends to the access controller 114 an authentication request for an integrated service, which includes authentication information such as an application client identifier and an authentication key, and service information for requesting an access right.

In step 401, the access controller 114 determines accessible services based on the received service information. Specifically, the access controller 114 determines whether it can authenticate the access right-requested service, and performs authentication if it can authenticate the service. However, if the access controller 114 cannot authenticate the service, the access controller 114 may forward the service authentication request to the service provider 115 or the service providing server 120. The access controller 114 cannot authenticate the service as above, for example, when it has no authentication information identical to an application client identifier and an authentication key for the application client 111 having requested authentication. A service provider shares authentication information in advance to create an application, and a module having no such authentication information in advance may request the authentication information from a module having authentication request.

In an embodiment of the present invention, it is assumed that the access controller 114 sends a request for service authentication to the service provider 115. For example, the access controller 114 may send an authentication request for an arbitrarily requested service to the service provider 115, if it cannot perform authentication on the requested service.

The access controller 114 may identify a module performing authentication on the requested service based on the authentication information such as the service authentication method information, and send an authentication request for the requested service to the identified module.

In step 402, the access controller 114 sends to the service provider 115 an authentication request for an integrated service, which includes authentication information such as an application client identifier and an authentication key, and service information for requesting an access right.

In step 403, the service provider 115 checks the authentication information for the application client 111. Specifically, the service provider 115 determines whether to authenticate the application client 111 based on the identifier and authentication key received from the application client 111, and then performs authentication according to the determination results. If the service provider 115 shares the authentication information in advance, then the service provider 115 may perform authentication on the application client 111 based on the authentication information.

If the service provider 115 cannot authenticate the application client 111, the service provider 115 sends an authentication request for the application client 111 to the service providing server 120 in step 404. A service provider shares authentication information in advance to create an application, and a module having no such authentication information cannot perform authentication.

In step 405, the service providing server 120 sends a service authentication response for the application client 111 to the service provider 115. Steps 404 and 405 may be optional according to the possibility of authentication by the service provider 115.

In step 406, the service provider 115 sends a service authentication response for the application client 111 to the access controller 114.

In step 407, the access controller 114 forwards the service authentication response received from the service provider 115 to the application client 111. The access controller 114 may collect authentication responses received from a plurality of service providing clients in the service provider 115, and forward them to the application client 111.

A process of performing authentication on the application client 111 and acquiring an access right to services or functions by a service providing client or server based on an authentication response from a service providing client will be described in detail below with reference to FIG. 5.

FIG. 5 illustrates a process of performing integrated service authentication on an application client and acquiring an access right to an integrated service by a service providing client or server based on an authentication response from a service providing client according to an embodiment of the present invention.

In step 500, the access controller 114 acquires service support information supported by the terminal 110 from the service provider 115. The service support information supported by the terminal 110 refers to information about the services supported by the service provider 115. In an embodiment of the present invention, any one of service providing clients associated with a plurality of services will be considered.

In step 501, the application client 111 sends to the access controller 114 an authentication request for an integrated service, which includes authentication information such as an application client identifier and an authentication key, and service information for requesting an access right.

In step 502, the access controller 114 checks the acquired service support information. Specifically, the access controller 114 determines whether the requested service can be authenticated in the service provider 115 by comparing the received service information with the acquired service support information.

If the authentication is possible, the access controller 114 sends to the service provider 115 an authentication request for a plurality of services, which includes authentication information and service information, in step 503.

In step 504, the service provider 115 checks the authentication information for the application client 111. Specifically, the service provider 115 determines whether to authenticate the application client 111 based on the identifier and authentication key received from the application client 111, and then performs authentication according to the determination results.

In step 505, the service provider 115 sends a service authentication response for the application client 111 to the access controller 114.

If the service provider 115 has performed authentication, the access controller 114 having received the authentication response from the service provider 115 forwards the authentication response received from the service provider 115 to the application client 111 in step 508. The access controller 114 may collect authentication responses received from a plurality of service providing clients in the service provider 115, and forward them to the application client 111.

If the service provider 115 cannot perform authentication on the application client 111, the access controller 114 sends a service authentication request for the application client 111 to the service providing server 120 in step 506.

In step 507, the service providing server 120 sends a service authentication response for the application client 111 to the service provider 115. Steps 506 and 507 may be optional according to the service authentication response from the service provider 115.

In this way, the present invention may acquire access rights to a plurality of services or functions at a time by performing authentication on the application client 111 and granting access rights to the plurality of services or functions.

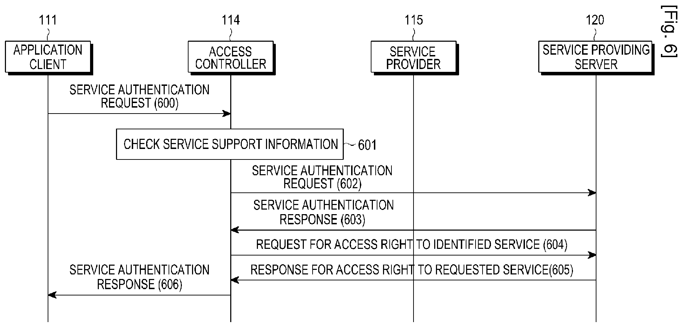

A process of performing authentication on the application client 111 and acquiring an access right to services or functions by a service providing server will be described in detail below with reference to FIG. 6.

FIG. 6 illustrates a process of performing integrated service authentication on an application client and acquiring an access right to an integrated service by a service providing server according to an embodiment of the present invention.

In step 600, the application client 111 sends to the access controller 114 an authentication request for an integrated service, which includes authentication information such as an application client identifier and an authentication key, and service information for requesting an access right.

In step 601, the access controller 114 determines accessible services based on the received service information. Specifically, the access controller 114 determines whether it can authenticate the access right-requested service, and performs authentication if it can authenticate the service. However, if the access controller 114 cannot authenticate the service, the access controller 114 may forward the service authentication request to the service provider 115 or the service providing server 120.

In an embodiment of the present invention, it is assumed that the access controller 114 sends a service authentication request to the service providing server 120. For example, the access controller 114 may send an authentication request for an arbitrarily requested service to the service providing server 120, if it cannot perform authentication on the requested service. The access controller 114 may identify a module performing authentication on the requested service based on the authentication information such as the service authentication method information, and send an authentication request for the requested service to the identified module.

In step 602, the access controller 114 sends to the service providing server 120 an authentication request for an integrated service, which includes authentication information such as an application client identifier and an authentication key, and service information for requesting an access right.

In step 603, the service providing server 120 performs authentication on the application client 111, and sends a service authentication response to the access controller 114.

In step 604, the access controller 114 sends a request for an access right to the service requested by the application client 111, to the service providing server 120.

In step 605, the service providing server 120 sends an access right response for the requested service to the access controller 114.

In step 606, the access controller 114 forwards the access right response received from the service providing server 120 to the application client 111. The access controller 114 may collect access right responses received not only from the service providing server 120 but also from a plurality of other service providing servers, and forward them to the application client 111.

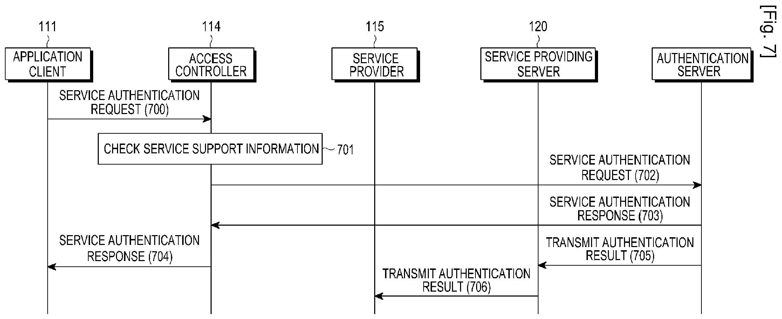

A process of performing authentication on the application client 111 and acquiring an access right to services or functions by an authentication server will be described in detail below with reference to FIG. 7.

In the present invention, the authentication server may manage a service access right of the application client 111, for example, when the access controller 114 sends an access right control to the authentication server in response to an authentication request received from the application client 111.

FIG. 7 illustrates a process of performing integrated service authentication on an application client and acquiring an access right to an integrated service by an authentication server according to an embodiment of the present invention.

In step 700, the application client 111 sends to the access controller 114 an authentication request for an integrated service, which includes authentication information such as an application client identifier and an authentication key, and service information for requesting an access right.

In step 701, the access controller 114 determines accessible services based on the received service information. Specifically, the access controller 114 determines whether it can authenticate the access right-requested service, and performs authentication if it can authenticate the service. However, if the access controller 114 cannot authenticate the service, the access controller 114 may forward the service authentication request to the service provider 115 or the service providing server 120. The access controller 114 may forward the service authentication request to the authentication server.

In an embodiment of the present invention, it is assumed that the access controller 114 sends a request for service authentication to the authentication server (not shown). In this case, the access controller 114 may send an authentication request for an arbitrarily requested service to the authentication server, if it cannot authenticate the requested service. The access controller 114 may send an authentication request to the authentication server even when the service provider 115 and the service providing server 120 cannot perform authentication.

In step 702, the access controller 114 sends to the authentication server an authentication request for an integrated service, which includes authentication information such as an application client identifier and an authentication key, and service information for requesting an access right.

In step 703, the authentication server performs authentication on the application client 111, and sends a service authentication response to the access controller 114.

In step 704, the access controller 114 sends a service authentication response for the application client 111 to the application client 111.

In step 705, the authentication server transmits the authentication results for the application client 111 to the service providing server 120. In step 706, the service providing server 120 transmits the authentication results to the service provider 115 to share the authentication results for the application client 111. Accordingly, the application client 111 may acquire an access right to a plurality of services through one authentication process.

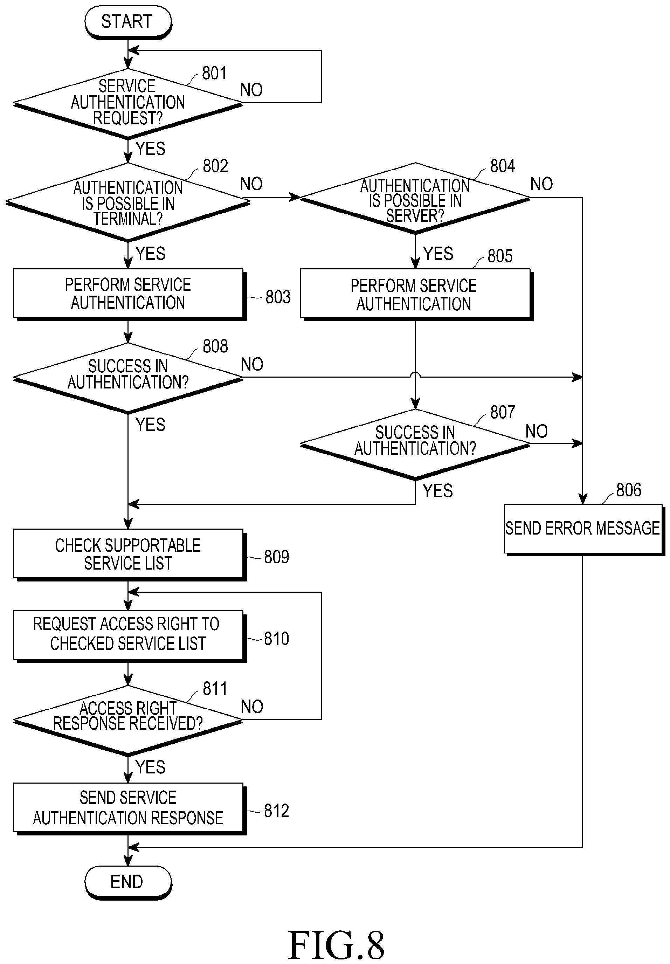

FIG. 8 illustrates a process of performing integrated service authentication in response to a service authentication request and acquiring an access right to an integrated service by a terminal according to an embodiment of the present invention.

In step 801, the access controller 114 determines whether there is a service authentication request from the application client 111. In the presence of the service authentication request, the access controller 114 proceeds to step 802. Otherwise, the access controller 114 continuously determines in step 801 whether there is a service authentication request.

In step 802, the access controller 114 determines whether service authentication is possible in a terminal. If service authentication is possible, the access controller 114 performs service authentication in step 803. Otherwise, the access controller 114 determines in step 804 whether service authentication is possible in a server.

Determining whether service authentication is possible in a terminal corresponds to determining whether service authentication is possible in the access controller 114 or the service provider 115 in the terminal 110. Determining whether service authentication is possible in a server corresponds to determining whether service authentication is possible in the service providing server 120 or the authentication server.

If it is determined in step 804 that service authentication is possible in a server, the access controller 114 sends a service authentication request to the server in step 805. On the other hand, if service authentication is not possible, the access controller 114 displays an error message in step 806. The server may include the service providing server 120 or the authentication server.

In step 807 following step 805, the access controller 114 determines whether a response indicating a success in authentication is received from the server. Upon receiving the response, the access controller 114 proceeds to step 809. Otherwise, the access controller 114 displays an error message in step 806.

In step 808 succeeding step 803, the access controller 114 determines whether the service authentication was successful. If the service authentication was successful, the access controller 114 checks a list of supportable services in step 809. Otherwise, the access controller 114 displays an error message in step 806.

In step 810, the access controller 114 requests an access right to the checked service list. The access controller 114 sends an access right request to at least one of the service provider 115, the service providing server 120, and the authentication server.

In step 811, the access controller 114 determines whether a response to the access right request is received. Upon receiving the response, the access controller 114 proceeds to step 812. Otherwise, the access controller 114 returns to step 810 and continuously requests an access right.

In step 812, the access controller 114 sends a response for the requested service authentication to the application client 111, completing the authentication process.

In this way, the present invention may acquire access rights to a plurality of services or functions at a time by performing authentication on the application client 111 and granting access rights to the plurality of services or functions.

As described above, through Open API, new services may be provided by relatively easily applying specific conventional computer programs and software functions. To this end, there is a need for a method in which an application may acquire access rights to a plurality of service providing modules at a time without requesting to acquire an access right to each service providing module individually, making it possible to provide a new integrated service.

Therefore, the web runtime environment may perform authentication on the application client and acquire and provide access rights to a plurality of service providing modules at a time without the application client requesting to acquire an access right to each service providing module individually, thereby allowing the service providing modules to provide services without realization of a plurality of mechanisms for authenticating the application client.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. An apparatus (110) for controlling an access to a plurality of services, comprising:
a service authentication requesting unit configured to receive an authentication request for requesting authentication about the plurality of services from an application client (111) included in the apparatus;
a service provider (115) including service providing clients corresponding to the plurality of services, respectively configured to provide authentication information for the plurality of services, and provide an access right to the plurality of services;
**characterized in that** the apparatus (110) comprises
an access right controller (114) configured to:
in response to the authentication request, determine whether service authentication is possible in the apparatus;
perform the service authentication if the service authentication is possible in the apparatus;
send a service authentication request to a server if the service authentication is impossible in the apparatus;
check a list of supportable services in the apparatus if the service authentication is successful in the apparatus or a response indicating a success in the service authentication is received from the server;
send an access right request to a service provider included in the apparatus or to the server;
receive an access right response including an access right from the service provider or from the server; and
send the access right in response to the service authentication request to the application client.

2. The apparatus of claim 1, wherein the service authentication request message includes authentication information including an identifier and an authentication key of the service authentication requesting unit, and service information for the plurality of services, and sends the authentication request message to the access right controller (114).

3. The apparatus of claim 2, wherein the access right controller (114) checks the authentication information in the received service authentication request.

4. The apparatus of claim 3, wherein the authentication information includes service authentication method information including information indicating a service authentication method for the plurality of services and service support information including information about a service supportable in the service provider (115).

5. The apparatus of claim 4, wherein the access right controller (114) sends a request for an access right to the plurality of services to the service provider (115) or to the server based on the service information and the service authentication method information.

6. The apparatus of claim 4, wherein the access right controller (114) sends a request for an access right to the plurality services to the service provider or to the server based on the service information and the service support information.

7. A method for controlling an access to a plurality of services, the method being performed in an apparatus (110) comprising:
receiving an authentication request for requesting authentication about the plurality of services from an application client (111) included in the apparatus;
**characterized by** in response to the authentication request, determining whether service authentication is possible in the apparatus;
performing the service authentication if the service authentication is possible in the apparatus;
sending a service authentication request to a server if the service authentication is impossible in the apparatus;
checking a list of supportable services in the apparatus if the service authentication is successful in the apparatus or a response indicating a success in the service authentication is received from the server;
sending an access right request to a service provider included in the apparatus or to the server;
receiving an access right response including an access right from the service provider or from the server; and
sending the access right in response to the service authentication request to the application client.

8. The method of claim 7, wherein the service authentication request message that includes authentication information including an identifier and an authentication key of a service authentication requesting unit, and service information for the plurality of services.

9. The method of claim 7, wherein the service provider (115) includes a plurality of service providing clients corresponding to the plurality of services, respectively.

10. The method of claim 8, wherein performing service authentication comprises checking the authentication information in the received service authentication request.

11. The method of claim 10, wherein the authentication information includes service authentication method information including information indicating a service authentication method for the plurality of services and service support information including information about a service supportable in the service provider (115) for providing an access right to the plurality of services.

12. The method of claim 11, wherein the sending the access right request comprises sending a request for an access right to the plurality of services to the service provider (115) or to the server based on the service information and the service authentication method information.

13. The method of claim 12, wherein the sending the access right request comprises sending a request for an access right to the plurality of services to the service provider or to the server based on the service information and the service support information.

## Patentansprüche

1. Vorrichtung (110) zum Steuern eines Zugriffs auf mehrere Dienste mit:
einer Dienstauthentifizierung-Anforderungseinheit, die eingerichtet ist, von einem Anwendungs-Client (111), der in der Vorrichtung enthalten ist, eine Authentifizierungsanforderung für die Anforderung einer Authentifizierung über die mehreren Dienste zu erhalten,
einem Dienstanbieter (115), der Dienstbereitstellungs-Clients aufweist, die zu den mehreren Diensten gehören, die jeweils eingerichtet sind, Authentifizierungsinformationen für die mehreren Dienste bereitzustellen und eine Zugriffsberechtigung zu den mehreren Dienste zu liefern,
**dadurch gekennzeichnet, dass** die Vorrichtung (110) ein Zugriffsberechtigungssteuerglied (114) aufweist, das eingerichtet ist,
in Reaktion auf die Authentifizierungsanforderung zu bestimmen, ob die Dienstauthentifizierung in der Vorrichtung möglich ist,
die Dienstauthentifizierung auszuführen, wenn die Dienstauthentifizierung in der Vorrichtung möglich ist,
die Dienstauthentifizierungsanforderung an einen Server zu senden, wenn die Dienstauthentifizierung in der Vorrichtung nicht möglich ist,
eine Liste von unterstützbaren Diensten in der Vorrichtung zu überprüfen, wenn die Dienstauthentifizierung in der Vorrichtung erfolgreich ist oder vom Server eine Antwort empfangen wird, die einen Erfolg in der Dienstauthentifizierung anzeigt,
eine Zugriffsberechtigungsanforderung an einen Dienstanbieter, der in der Vorrichtung enthalten ist, oder an den Server zu senden,
eine Zugriffsberechtigungsantwort, die eine Zugriffsberechtigung enthält, vom Dienstanbieter oder vom Server zu empfangen und
die Zugriffsberechtigung in Reaktion auf die Zugriffsberechtigungsanforderung an den Anwendungs-Client zu senden.

2. Vorrichtung nach Anspruch 1, wobei die Dienstauthentifizierung-Anforderungsnachricht Authentifizierungsinformationen aufweist, die eine Kennung und einen Authentifizierungsschlüssel der Dienstauthentifizierung-Anforderungseinheit und Dienstinformationen für die mehreren Dienste enthalten, und wobei die Authentifizierung-Anforderungsnachricht an das Zugriffsberechtigungssteuerglied (114) gesendet wird.

3. Vorrichtung nach Anspruch 2, wobei das Zugriffsberechtigungssteuerglied (114) die Authentifizierungsinformationen in der empfangenen Dienstauthentifizierungsanforderung überprüft.

4. Vorrichtung nach Anspruch 3, wobei die Authentifizierungsinformationen aufweisen:
Dienstauthentifizierung-Verfahrensinformationen mit Informationen, die ein Dienstauthentifizierungsverfahren für die mehreren Dienste anzeigen, und Dienstunterstützungsinformationen mit Informationen über einen Dienst, der im Dienstanbieter (115) unterstützt werden kann.

5. Vorrichtung nach Anspruch 4, wobei das Zugriffsberechtigungssteuerglied (114) eine Anforderung für eine Zugriffsberechtigung zu den mehreren Diensten an den Dienstanbieter (115) oder an den Server auf Basis der Dienstinformationen und der Dienstauthentifizierung-Verfahrensinformationen sendet.

6. Vorrichtung nach Anspruch 4, wobei das Zugriffsberechtigungssteuerglied (114) eine Anforderung für eine Zugriffsberechtigung zu den mehreren Diensten an den Dienstanbieter oder an den Server auf Basis der Dienstinformationen und der Dienstunterstützungsinformationen sendet.

7. Verfahren zum Steuern eines Zugriffs auf mehrere Dienste, wobei das Verfahren in einer Vorrichtung (110) ausgeführt wird, umfassend:
Empfangen einer Authentifizierungsanforderung für das Anfordern einer Authentifizierung über die mehreren Dienste von einem Anwendungs-Client (111), der in der Vorrichtung enthalten ist;
**dadurch gekennzeichnet, dass**
in Reaktion auf die Authentifizierungsanforderung bestimmt wird, ob die Dienstauthentifizierung in der Vorrichtung möglich ist,
die Dienstauthentifizierungsanforderung ausgeführt wird, wenn die Dienstauthentifizierung in der Vorrichtung möglich ist,
eine Dienstauthentifizierungsanforderung an einen Server gesendet wird, wenn die Dienstauthentifizierung in der Vorrichtung nicht möglich ist,
eine Liste von unterstützbaren Diensten in der Vorrichtung überprüft wird, wenn die Dienstauthentifizierung in der Vorrichtung erfolgreich ist oder vom Server eine Antwort empfangen wird, die einen Erfolg in der Dienstauthentifizierung anzeigt,
eine Zugriffsberechtigungsanforderung an einen Dienstanbieter, der in der Vorrichtung enthalten ist, oder an den Server gesendet wird,
eine Zugriffsberechtigungsantwort, die eine Zugriffsberechtigung enthält, vom Dienstanbieter oder vom Server aus empfangen wird und
die Zugriffsberechtigung in Reaktion auf die Zugriffsberechtigungsanforderung an den Anwendungs-Client gesendet wird.

8. Verfahren nach Anspruch 7, wobei die Dienstauthentifizierung-Anforderungsnachricht, die Authentifizierungsinformationen aufweist, eine Kennung und einen Authentifizierungsschlüssel einer Dienstauthentifizierung-Anforderungseinheit und Dienstinformationen für die mehreren Dienste enthält.

9. Verfahren nach Anspruch 7, wobei der Dienstanbieter (115) mehrere Dienstbereitstellungs-Clients aufweist, die jeweils zu den mehreren Diensten gehören.

10. Verfahren nach Anspruch 8, wobei das Ausführen der Dienstauthentifizierung ein Überprüfen der Authentifizierungsinformationen in der empfangenen Dienstauthentifizierungsanforderung umfasst.

11. Verfahren nach Anspruch 10, wobei die Authentifizierungsinformationen aufweisen:
Dienstauthentifizierung-Verfahrensinformationen mit Informationen, die ein Dienstauthentifizierungsverfahren für die mehreren Dienste anzeigen, und Dienstunterstützungsinformationen mit Informationen über einen Dienst, der im Dienstanbieter (115) unterstützt werden kann, um eine Zugangsberechtigung zu den mehreren Diensten bereitzustellen.

12. Verfahren nach Anspruch 11, wobei das Senden der Zugriffsberechtigungsanforderung ein Senden einer Anforderung für eine Zugriffsberechtigung zu den mehreren Diensten an den Dienstanbieter (115) oder an den Server auf Basis der Dienstinformationen und der Dienstauthentifizierung-Verfahrensinformationen umfasst.

13. Verfahren nach Anspruch 12, wobei das Senden der Zugriffsberechtigungsanforderung ein Senden einer Anforderung für eine Zugriffsberechtigung zu den mehreren Diensten an den Dienstanbieter oder an den Server auf Basis der Dienstinformationen und der Dienstunterstützungsinformationen umfasst.

## Revendications

1. Appareil (110) pour commander un accès à une pluralité de services, comprenant :
une unité de demande d'authentification de service configurée pour recevoir une demande d'authentification pour demander une authentification en ce qui concerne la pluralité de services à un client d'application (111) inclus dans l'appareil ;
un fournisseur de services (115) comprenant des clients de fourniture de services correspondant à la pluralité de services, respectivement configurés pour fournir des informations d'authentification pour la pluralité de services, et fournir un droit d'accès à la pluralité de services ;
**caractérisé en ce que** l'appareil (110) comprend un organe de commande de droit d'accès (114) configuré pour :
en réponse à la demande d'authentification, déterminer si une authentification de service est possible dans l'appareil ;
effectuer l'authentification de service si l'authentification de service est possible dans l'appareil ;
envoyer une demande d'authentification de service à un serveur si l'authentification de service est impossible dans l'appareil ;
consulter une liste de services pouvant être pris en charge dans l'appareil si l'authentification de service est réussie dans l'appareil ou une réponse indiquant une réussite de l'authentification de service est reçue en provenance du serveur ;
envoyer une demande de droit d'accès à un fournisseur de services inclus dans l'appareil ou au serveur ;
recevoir une réponse de droit d'accès comprenant un droit d'accès en provenance du fournisseur de services ou du serveur ; et
envoyer le droit d'accès en réponse à la demande d'authentification de service au client d'application.

2. Appareil selon la revendication 1, dans lequel le message de demande d'authentification de service comprend des informations d'authentification comprenant un identifiant et une clé d'authentification de l'unité de demande d'authentification de service, et des informations de service pour la pluralité de services, et envoie le message de demande d'authentification à l'organe de commande de droit d'accès (114).

3. Appareil selon la revendication 2, dans lequel l'organe de commande de droit d'accès (114) consulte les informations d'authentification dans la demande d'authentification de service reçue.

4. Appareil selon la revendication 3, dans lequel les informations d'authentification comprennent des informations de méthode d'authentification de service comprenant des informations indiquant une méthode d'authentification de service pour la pluralité de services et des informations de prise en charge de service comprenant des informations relatives à un service pouvant être pris en charge dans le fournisseur de service (115).

5. Appareil selon la revendication 4, dans lequel l'organe de commande de droit d'accès (114) envoie une demande pour un droit d'accès à la pluralité de services au fournisseur de services (115) ou au serveur sur la base des informations de service et des informations de méthode d'authentification de service.

6. Appareil selon la revendication 4, dans lequel l'organe de commande de droit d'accès (114) envoie une demande pour un droit d'accès à la pluralité de services au fournisseur de services ou au serveur sur la base des informations de services et des informations de prise en charge de service.

7. Procédé de commande d'un accès à une pluralité de services, le procédé étant effectué dans un appareil (110) comprenant :
recevoir une demande d'authentification pour demander une authentification en ce qui concerne la pluralité de services à un client d'application (111) inclus dans l'appareil ;
**caractérisé par** :
en réponse à la demande d'authentification, déterminer si une authentification de service est possible dans l'appareil ;
effectuer l'authentification de service si l'authentification de service est possible dans l'appareil ;
envoyer une demande d'authentification de service à un serveur si l'authentification de service est impossible dans l'appareil ;
consulter une liste de services pouvant être pris en charge dans l'appareil si l'authentification de service est réussie dans l'appareil ou une réponse indiquant une réussite de l'authentification de service est reçue en provenance du serveur ;
envoyer une demande de droit d'accès à un fournisseur de services inclus dans l'appareil ou au serveur ;
recevoir une réponse de droit d'accès comprenant un droit d'accès en provenance du fournisseur de services ou du serveur ; et
envoyer le droit d'accès en réponse à la demande d'authentification de service au client d'application.

8. Procédé selon la revendication 7, dans lequel le message de demande d'authentification de service comprend des informations d'authentification comprenant un identifiant et une clé d'authentification d'une unité de demande d'authentification de service, et des informations de service pour la pluralité de services.

9. Procédé selon la revendication 7, dans lequel le fournisseur de services (115) comprend une pluralité de clients fournissant des services correspondant respectivement à la pluralité de services.

10. Procédé selon la revendication 8, dans lequel l'exécution d'une authentification de service comprend la consultation des informations d'authentification dans la demande d'authentification de service reçue.

11. Procédé selon la revendication 10, dans lequel les informations d'authentification comprennent des informations de méthode d'authentification de service comprenant des informations indiquant une méthode d'authentification de service pour la pluralité de services et des informations de prise en charge de service comprenant des informations relatives à un service pouvant être pris en charge dans le fournisseur de service (115) pour fournir un droit d'accès à la pluralité de services.

12. Procédé selon la revendication 11, dans lequel l'envoi de la demande de droit d'accès comprend l'envoi d'une demande pour un droit d'accès à la pluralité de services au fournisseur de services (115) ou au serveur sur la base des informations de service et des informations de méthode d'authentification de service.

13. Procédé selon la revendication 12, dans lequel l'envoi de la demande de droit d'accès comprend l'envoi d'une demande pour un droit d'accès à la pluralité de services au fournisseur de services ou au serveur sur la base des informations de services et des informations de prise en charge de service.
